# EUROPEAN PATENT SPECIFICATION

(11) **EP 2 520 960 B1**
(45) Date of publication and mention of the grant of the patent: **09.07.2014**
(21) Application number: 11164935.6
(22) Date of filing: 05.05.2011
(51) Int. Cl.: G02B 6/44, H02G 15/013, H02G 15/113

(54) **Cable closure**
Kabelmuffe
Manchon de câble

(43) Date of publication of application: 07.11.2012
(73) Proprietor: CCS Technology, Inc., Wilmington, DE 19803 (US)
(72) Inventor: Kittler, Lars, Dipl.-Ing., 58239, Schwerte (DE); Breuer-Heckel, Mike, Dipl.-Ing., 44143, Dortmund (DE); Badura, Stefan, Dipl.-Ing., 58708, Menden (DE)
(74) Representative: Sturm, Christoph

(56) References cited:
- WO-A1-2008/051671
- DE-A1- 3 512 165
- DE-U1- 8 914 665
- US-A1- 2003 081 396

## Description

The present patent application relates to a cable closure in accordance with the preamble of claim 1.

Cable closures are used in telecommunications cable networks for protecting spliced joints at connection points between two telecommunications cables and for protecting branch points or splitting points of telecommunications cables. In this case, the cable closures need to ensure the continuity of the telecommunications cables as though the telecommunications cables had not been interrupted.

The product catalog "Accessories for Fiber Optic Networks", Edition 1, page 75, Corning Cable Systems, 2001 discloses cable closures firstly in the form of inline cable closures and secondly in the form of dome cable closures, which all have a housing which defines an interior of the cable closure and seals off the interior thereof from the outside. Conventionally, assemblies for connecting, namely for splicing, telecommunications conductors guided in telecommunications cables are arranged in the interior defined by the housing of the cable closure.

In the case of cable closures in the form of dome cable closures, the housing is formed by a dome-like covering body and a sealing body, the sealing body defining cable insertion regions, which are sealed off on one side of the dome-like covering body and via which all of the cables can be inserted into the interior of the cable closure.

In the case of cable closures in the form of inline cable closures, cable insertion regions which are sealed off on two opposite sides of the covering body are formed for inserting cables into the interior of the cable closure, with the result that inline cable closures can be installed in one line with the cables.

DE 20 2010 006 582 U1 discloses an inline cable closure, having a housing, which delimits an interior of the cable closure and seals off the cable closure toward the outside, said housing comprising a covering body, said covering body comprises shells and provides on mutually opposite sides of the same cable insertion regions for inserting cables into said interior of the cable closure and/or for passing cables out of said interior of the cable closure. Compressible and/or deformable sealing elements are positioned at said mutually opposite sides of said covering body in the region of said cable insertion regions of said shells, wherein each of said sealing elements is positioned between barrier walls of the respective shell, namely between a barrier wall facing the interior of the cable closure and a barrier wall remote from the interior of the cable closure.

According to DE 20 2010 006 582 U1 the inline cable closure comprises a closing mechanism by which the shells can be locked together in a closed status of the cable closure, whereby said closing mechanism comprises clip-like fastening elements and fastening screws extending through the two shells.

A cable closure according to the preamble of claim 1 is known from WO 2008/051671 A1.

Against this background, the present patent application provides a novel cable closure having improved closing mechanism.

The closing mechanism comprises at least one knee lever like locking segment having a locking hook and a locking link, whereby the locking link is with a first end pivotably attached to a first one of said shells, and whereby the locking link is with a second end pivotably attached to a first end of the locking hook, whereby a second end of the locking hook engages behind an edge of the respective second side of a second one of said shells when said shells are in the closed position and locked to each other.

Exemplary embodiments of the invention will be explained in more detail, without any restriction being imposed, with reference to the drawing, in which:
- Figure 1: shows a perspective view of a preferred exemplary embodiment of a cable closure in form of an inline cable closure in a closed, completely locked status of the same;
- Figure 2: shows a perspective view of the inline cable closure of Figure 1 in a closed, partially un-locked status of the same;

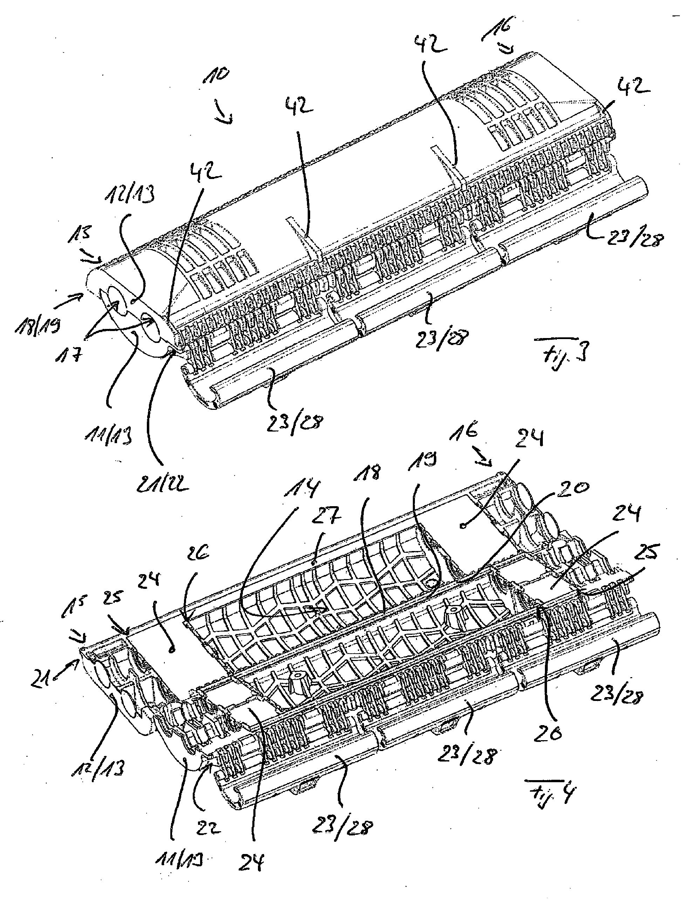

- Figure 3: shows a perspective view of the inline cable closure of Figure 1 in a closed, completely un-locked status of the same;
- Figure 4: shows a perspective view of the inline cable closure of Figure 1 in an opened status of the same;
- Figure 5: shows a perspective cross-section through the inline cable clo-sure of Figure 1 in a closed, partially un-locked status of the same;

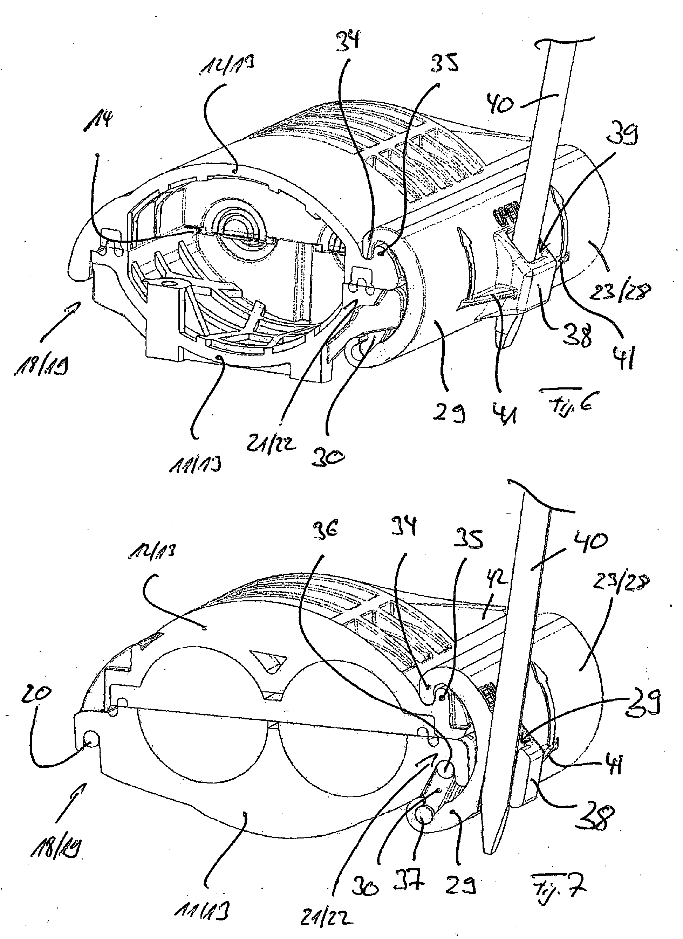

- Figure 6: shows another perspective cross-section through the inline ca-ble closure of Figure 1;
- Figure 7: shows another perspective cross-section through the inline ca-ble closure of Figure 1;

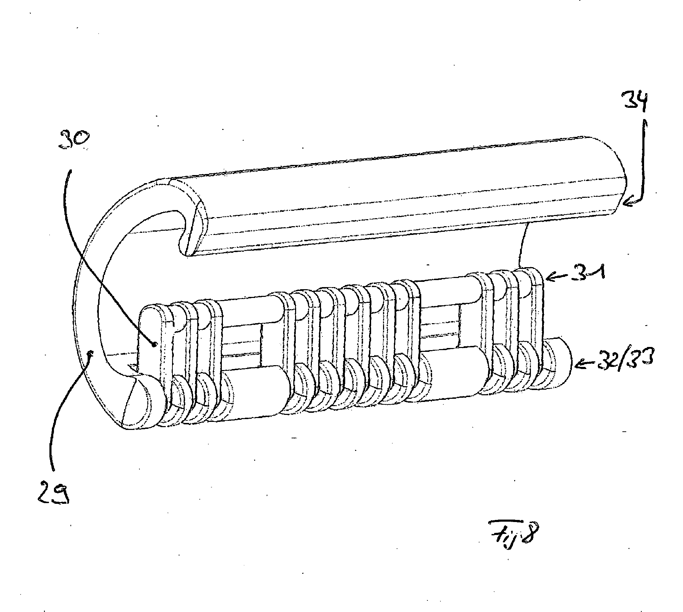

- Figure 8: shows a detail of the closing mechanism of the inline cable clo-sure of Figure 1.

The present invention relates to a cable closure 10, which in the preferred exemplary embodiment shown is an inline cable closure comprises a housing which is formed by a covering body 13 composed of two shells 11 and 12.

In the exemplary embodiment shown, the shells 11 and 12 are half-shells and the half-shell 11 is a so-called lower shell and the half-shell 12 is a so-called upper shell of the covering body 13, which together define an interior 14 of the inline cable closure 10.

Cable insertion regions 17 are formed on mutually opposite sides 15 and 16 of the inline cable closure 10 or the covering body 13, with it being possible for cables to be inserted into the interior 14 of the inline cable closure 10 or passed out of said interior. In the exemplary embodiment shown, in each case two cable insertion regions 17 for inserting in each case one cable into the interior 14 of the inline cable closure 10 are formed on both mutually opposite sides 15 and 16 of the covering body 13.

In the shown embodiment, the two half-shells 11 and 12 are hinged together at first sides 18, 19 of the same. In the example embodiment said first sides 18, 19 are longitudinal sides of the shells 11, 12. The half-shells 11 and 12 can be pivoted with respect to each other around a hinge 20 by which said two half-shells 11 and 12 are fixed to each other at said first longitudinal sides 18, 19 of the same. When the inline cable closure 10 is closed, second sides 21, 22 of the two half-shells 11 and 12 can be locked to each other by a closing mechanism 23. In the example embodiment said second sides 21, 22 are other longitudinal sides of the shells 11, 12. The closing mechanism 23 will be described below in greater detail.

In order to ensure that the cables to be inserted into the interior 14 of the inline cable closure 10 via the cable insertion regions 17 are sealed off, compressible and/or deformable sealing elements 24, which are each arranged between barrier walls 25 and 26, are positioned in the region of both mutually opposite sides 15 and 16 of the covering body 13 of the inline cable closure 10 on which the cable insertion regions 17 are formed, both in the region of the lower half-shell 11 and in the region of the upper half-shell 12.

A first barrier wall 25 is in each case, namely on both mutually opposite sides 15 and 16 in the region of the lower half-shell 11 and in the region of the upper half-shell 12, remote from the interior 14 of the inline cable closure 10 while a second barrier walls 26 is in each case facing the interior 14 of the cable closure 10.

Each of said barrier walls 25 and 26, namely both the barrier walls 25 remote from the interior 14 and the barrier walls 26 facing the interior 14, extends transversely with respect to an insertion direction of the cable insertion regions 17.

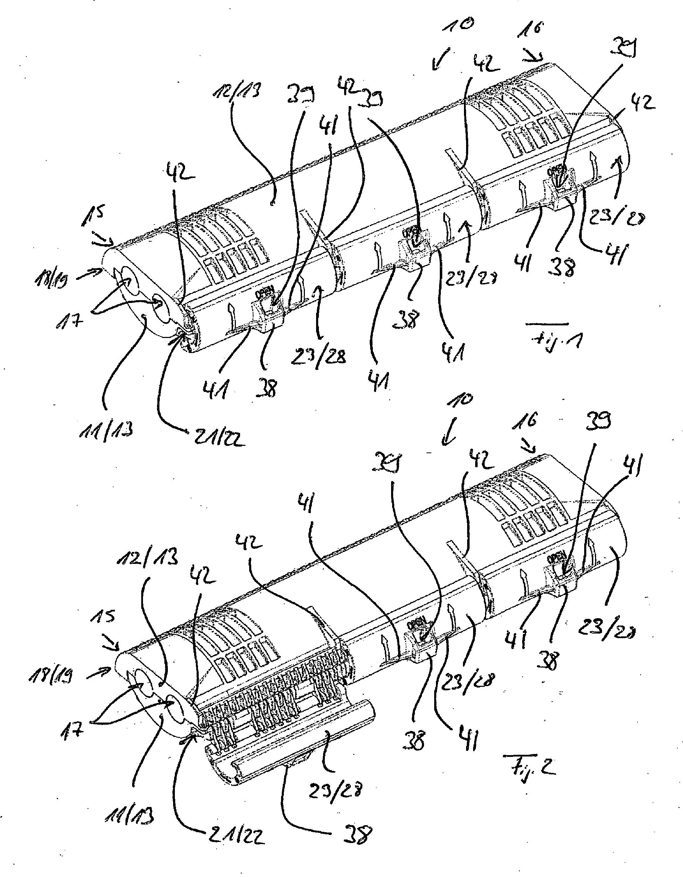

As shown in Figure 2, the compressible and/or deformable sealing elements 24 of the upper half-shell 12, which are associated with the cable insertion regions 17, are coupled via compressible and/or deformable sealing elements 27, which run parallel to longitudinal sides 18, 22 of the upper half-shell 12. As a result, an annular, closed sealing region is formed by the sealing elements 24 and 27 in the region of the upper half-shell 12. Possibly, an analogous sealing region can also be formed in the region of the lower half-shell 11.

The compressible and/or deformable sealing elements 24 and possibly 27 are preferably gel-like sealing elements, for example polyurethane gels or silicone gels. Such gel-like sealing elements are deformable and can be compressible.

It is also possible to use sealing elements 24 which are partially composed of different materials, for example from a deformable, gel-like sealing material and from a foam-like compressible sealing material.

As mentioned above, said half-shells 11, 12 of said covering body 13 are hinged together at said first longitudinal sides 18, 19 so that said two half-shells 11, 12 can be pivoted relative to each other around an axis or hinge 20 running parallel to said longitudinal sides 18, 19 when opening and closing the cable closure 10.

The closing mechanism 23 can be used to lock said half-shells 11, 12 of said covering body 13 to each other at second longitudinal sides 21, 22 of the same when said half-shells 11, 12 of said covering body 13 are in the closed position.

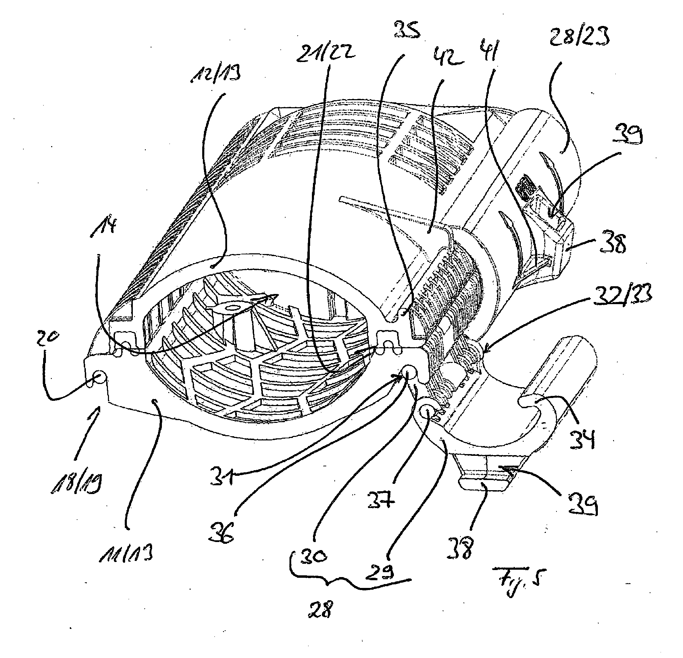

The closing mechanism 23 comprises at least one knee lever like locking segment 28 each having a locking hook 29 and a locking link 30 (see Figure 5). In the shown embodiment the closing mechanism 23 comprises three knee lever like locking segments 28. The three knee lever like locking segments 28 are being positioned side by side and are individually lockable and un-lockable.

The locking link 30 of the respective knee lever like locking segment 28 is with a first end 31 pivotably attached to a first one of said half-shells 11, namely in the shown embodiment to the lower half-shells 11. The locking link 30 of the respective knee lever like locking segment 28 is with a second end 32 pivotably attached to a first end 33 of the respective locking hook 29, whereby a second end 34 of the locking hook 29 engages behind an edge 35 of the respective second side of a second one of said half-shells 12, namely in the shown embodiment behind an edge 35 of the upper half-shell 12, when said half-shells 11, 12 are in the closed position and locked to each other.

The locking link 30 of the respective knee lever like locking segment 28 can be pivoted with respect to the first one of said half-shells 11, namely in the shown embodiment with respect to the lower half-shells 11, around an axis or hinge 36 assigned to the first end 31 of the locking link 30.

Further on, the locking link 30 of the respective knee lever like locking segment 28 can be pivoted with respect to the locking hook 29 around an axis or hinge 37 assigned to the second end 32 of the locking link 30.

Said axes or hinges 36, 37 run both in parallel to said longitudinal sides 18, 19, 21, 22 of the half-shells 11, 12.

For locking such a knee lever like locking segment 28 the locking hook 29 and locking link 30 of the same are pivoted in such a way that the second end 34 of the locking hook 29 engages behind the edge 35 of said upper half-shell 12 and then the locking hook 29 and locking link 30 are pivoted in a certain direction, in the shown embodiment in a clockwise direction, while the second end 34 of the locking hook 29 still engages behind said edge 35. For un-locking the same the locking hook 29 and locking link 30 are pivoted in an opposite direction, in the shown embodiment in a counterclockwise direction.

In order to provide easily the locking or un-locking forces needed for such a movement of locking hook 29 and locking link 30 while the second end 34 of the locking hook 29 engages behind said edge 35, the locking hook 29 of the respective knee lever like locking segment 28 comprises a protrusion 38 with an through hole 39 for receiving a leverage tool 40 like a screw driver for locking and/or un-locking the respective knee lever like locking segment 28.

The looking force can applied by said leverage tool 40 when the same is inserted into said through hole 39 by pushing or pulling said leverage tool 40 in the first direction, e.g. the clockwise direction. The un-looking force can applied by said leverage tool 40 when the same is inserted into said through hole 39 by pushing or pulling said leverage tool in the second direction, e.g. the counterclockwise direction.

Flanges 41 of said protrusions 38 provide a greater mechanical stiffness for said protrusions 38. The flanges 41 are positioned on both sides of each protrusion 38 and run perpendicular to the direction of the respective through hole 39 and in parallel to the longitudinal sides 18, 19, 21, 22 of the half-shells 11, 12.

It is possible to remove or eject dirt or stones from the said through hole 39 by using said leverage tool 40 when needing access to an inline cable closure 10 installed in the field.

The second one of said half-shells 12, namely in the shown embodiment to the upper half-shells 12, comprises ribs 42 running perpendicular to the second longitudinal side 21 of the same an both sides of the or each knee lever like locking segment 28. These ribs 42 as well as the design of the closing mechanism 23 protect the closing mechanism 23 against damages and accidental un-locking/opening when using a spade to dig out a cable closure installed in the field below ground. Due to the ribs 42 a spade will slide over the closing mechanism 23.

### List of reference numerals

- 10: inline cable closure
- 11: shell/lower half-shell
- 12: shell/upper half-shell
- 13: covering body
- 14: interior
- 15: side
- 16: side
- 17: cable insertion region
- 18: longitudinal side
- 19: longitudinal side
- 20: hinge
- 21: longitudinal side
- 22: longitudinal side
- 23: closing mechanism
- 24: sealing element
- 25: barrier wall
- 26: barrier wall
- 27: sealing element
- 28: knee lever like locking segment
- 29: locking hook
- 30: locking link
- 31: first side
- 32: second side
- 33: first side
- 34: second side
- 35: edge
- 36: hinge
- 37: hinge
- 38: protrusion
- 39: through hole
- 40: leverage tool
- 41: flange
- 42: rib

## Claims

1. A cable closure, having a housing, which delimits an interior of the cable closure and seals off the cable closure toward the outside, said housing comprising a covering body (13), said covering body (13) comprises shells (11, 12) and provides on mutually opposite sides (15, 16) of the same cable insertion regions (17) for inserting cables into said interior of the cable closure and/or for passing cables out of said interior of the cable closure, wherein compressible and/or deformable sealing elements (24) are positioned at said mutually opposite sides (15, 16) of said covering body (13) in the region of said cable insertion regions (17) of said shells (11, 12), wherein said shells (11, 12) can be locked together in a closed status of the cable closure by a closing mechanism, wherein said shells (11, 12) are hinged together at first sides (18, 19) so that said shells (11, 12) can be pivoted relative to each other when opening and closing the cable closure, and wherein the closing mechanism (23) can be used to lock said shells (11, 12) to each other at second sides (21, 22) of the same when said shells (11, 12) are in the closed position, **characterized in that** the closing mechanism (23) comprises at least one knee lever like locking segment (28) having a locking hook (29) and a locking link (30), whereby the locking link (30) is with a first end (31) pivotably attached to a first one of said shells (11), and whereby the locking link (30) is with a second end (32) pivotably attached to a first end (33) of the locking hook (29), whereby a second end (34) of the locking hook (29) engages behind an edge (35) of the respective second side of a second one of said shells (12) when said shells (11, 12) are in the closed position and locked to each other.

2. The cable closure as claimed in claim 1, **characterized in that** the closing mechanism (23) comprises at least two knee lever like locking segments (28) being positioned side by side and being individually lockable and un-lockable.

3. The cable closure as claimed in claim 1 or 2, **characterized in that** the locking link (30) of the respective knee lever like locking segment (28) can be pivoted with respect to the first one of said shells (11) and with respect to the locking hook (29) both around an axis or hinge running parallel to said sides (18, 19, 21, 22) of the shells (11, 12).

4. The cable closure as claimed in claims 1 to 3, **characterized in that** the locking hook (29) of the respective knee lever like locking segment (28) comprises a protrusion (38) with an through hole (39) for receiving a leverage tool (40) like a screw driver for locking and/or un-locking the respective knee lever like locking segment (28).

5. The cable closure as claimed in claim 4, **characterized in that** a looking force can applied by said leverage tool (40) when the same is inserted into said through hole (39) by pushing or pulling said leverage tool in a first, e.g. clockwise, direction, and that an un-looking force can applied by said leverage tool (40) when the same is inserted into said through hole (39) by pushing or pulling said leverage tool in a second, e.g. counterclockwise, direction.

6. The cable closure as claimed in claims 1 to 5, **characterized in that** the second one of said shells (12) comprises ribs (42) running perpendicular to the second side of the same an both sides of the or each knee lever like locking segment (28).

## Patentansprüche

1. Kabelmuffe mit einem Gehäuse, das einen Innenraum der Kabelmuffe begrenzt und die Kabelmuffe nach außen hin abdichtet,
wobei das Gehäuse einen Abdeckkörper (13) umfasst, wobei der Abdeckkörper (13) Schalen (11, 12) umfasst und einander gegenüberliegende Seiten (15, 16) der gleichen Kabeleinführbereiche (17) zum Einführen von Kabeln in den Innenraum der Kabelmuffe und/oder zum Herausführen von Kabeln aus dem Innenraum der Kabelmuffe bereitstellt,
wobei komprimierbare und/oder verformbare Dichtungselemente (24) an den einander gegenüberliegenden Seiten (15, 16) des Abdeckkörpers (13) in dem Bereich der Kabeleinführbereiche (17) der Schalen (11, 12) angeordnet sind,
wobei die Schalen (11, 12) in einem geschlossenen Zustand der Kabelmuffe mit einem Verschlussmechanismus miteinander verriegelt werden können, wobei die Schalen (11, 12) an ersten Seiten (18, 19) über ein Scharnier miteinander verbunden sind, sodass die Schalen (11, 12) in Bezug aufeinander geschwenkt werden können, wenn die Kabelmuffe geöffnet und geschlossen wird, und
wobei der Verschlussmechanismus (23) verwendet werden kann, um die Schalen (11, 12) an zweiten Seiten (21, 22) davon miteinander zu verriegeln, wenn sich die Schalen (11, 12) in der geschlossenen Position befinden,
**dadurch gekennzeichnet, dass**
der Verschlussmechanismus (23) mindestens ein kniehebelartiges Verriegelungssegment (28) mit einem Verriegelungshaken (29) und einer Verriegelungsverbindung (30) umfasst, wodurch die Verriegelungsverbindung (30) mit einem ersten Ende (31) schwenkbar an einer ersten der Schalen (11) befestigt ist, und wodurch die Verriegelungsverbindung (30) mit einem zweiten Ende (32) schwenkbar an einem ersten Ende (33) des Verriegelungshakens (29) befestigt ist, wodurch ein zweites Ende (34) des Verriegelungshakens (29) hinter eine Kante (35) der zugehörigen zweiten Seite einer zweiten der Schalen (12) in Eingriff gelangt, wenn sich die Schalen (11, 12) in der geschlossenen Position befinden und miteinander verriegelt sind.

2. Kabelmuffe nach Anspruch 1, **dadurch gekennzeichnet, dass** der Verschlussmechanismus (23) mindestens zwei kniehebelartige Verriegelungssegmente (28) umfasst, die nebeneinander angeordnet und einzeln verriegelbar und entriegelbar sind.

3. Kabelmuffe nach Anspruch 1 oder 2, **dadurch gekennzeichnet, dass** die Verriegelungsverbindung (30) des zugehörigen kniehebelartigen Verriegelungssegments (28) in Bezug auf die erste der Schalen (11) und in Bezug auf den Verriegelungshaken (29) an einer Achse oder einem Scharnier geschwenkt werden kann, die/das parallel zu den Seiten (18, 19, 21, 22) der Schalen (11, 12) verläuft.

4. Kabelmuffe nach einem der Ansprüche 1 bis 3, **dadurch gekennzeichnet, dass** der Verriegelungshaken (29) des zugehörigen kniehebelartigen Verriegelungssegments (28) einen Vorsprung (38) mit einer Durchgangsöffnung (39) zum Aufnehmen eines Hebelwerkzeugs (40) wie eines Schraubenziehers zum Verriegeln und/oder Entriegeln des zugehörigen kniehebelartigen Verriegelungssegments (28) umfasst.

5. Kabelmuffe nach Anspruch 4, **dadurch gekennzeichnet, dass** eine Verriegelungskraft von dem Hebelwerkzeug (40) angelegt werden kann, wenn dieses in die Durchgangsöffnung (39) durch Drücken oder Ziehen des Hebelwerkzeugs in eine erste Richtung, z. B. im Uhrzeigersinn, eingeführt wird, und dadurch, dass eine Entriegelungskraft von dem Hebelwerkzeug (40) angelegt werden kann, wenn dies in die Durchgangsöffnung (39) durch Drücken oder Ziehen des Hebelwerkzeugs in eine zweite Richtung, z. B. gegen den Uhrzeigersinn, eingeführt wird.

6. Kabelmuffe nach einem der Ansprüche 1 bis 5, **dadurch gekennzeichnet, dass** die zweite der Schalen (12) Rippen (42) umfasst, die senkrecht zu der zweiten Seite derselben an beiden Seiten des oder jedes kniehebelartigen Verriegelungssegments (28) verlaufen.

## Revendications

1. Manchon de câble, comprenant un boîtier qui délimite un intérieur du manchon de câble et ferme le manchon de câble vers l'extérieur, ledit boîtier comprenant un corps de recouvrement (13), ledit corps de recouvrement (13) comprenant des coques (11, 12) et fournissant, sur des côtés mutuellement opposés (15, 16) dudit câble, des régions d'insertion (17) pour insérer des câbles dans ledit intérieur du manchon de câble et/ou pour faire passer des câbles hors dudit intérieur du manchon de câble, des éléments d'étanchéité compressibles et/ou déformables (24) étant positionnés au niveau desdits côtés mutuellement opposés (15, 16) dudit corps de recouvrement (13), dans la région desdites régions d'insertion de câbles (17) desdites coques (11, 12), lesdites coques (11, 12) pouvant être verrouillées l'une à l'autre dans un état fermé du manchon de câble par un mécanisme de fermeture, lesdites coques (11, 12) étant articulées l'une à l'autre au niveau de premiers côtés (18, 19) de telle sorte que lesdites coques (11, 12) puissent être pivotées l'une par rapport à l'autre lors de l'ouverture et de la fermeture du manchon de câble, et le mécanisme de fermeture (23) pouvant être utilisé pour verrouiller lesdites coques (11, 12) l'une à l'autre au niveau de deuxièmes côtés (21, 22) de celles-ci lorsque lesdites coques (11, 12) sont dans la position fermée, **caractérisé en ce que** le mécanisme de fermeture (23) comprend au moins un segment de verrouillage (28) de type genouillère ayant un crochet de verrouillage (29) et une liaison de verrouillage (30), la liaison de verrouillage (30) étant fixée de manière pivotante par une première extrémité (31) à une première desdites coques (11), et la liaison de verrouillage (30) étant fixée de manière pivotante par une deuxième extrémité (32) à une première extrémité (33) du crochet de verrouillage (29), une deuxième extrémité (34) du crochet de verrouillage (29) s'engageant derrière un bord (35) du deuxième côté respectif d'une deuxième desdites coques (12) lorsque lesdites coques (11, 12) sont dans la position fermée et sont verrouillées l'une à l'autre.

2. Manchon de câble selon la revendication 1, **caractérisé en ce que** le mécanisme de fermeture (23) comprend au moins deux segments de verrouillage (28) de type genouillère positionnés côte à côte et pouvant être individuellement verrouillés et déverrouillés.

3. Manchon de câble selon la revendication 1 ou 2, **caractérisé en ce que** la liaison de verrouillage (30) du segment de verrouillage (28) de type genouillère respectif peut être pivotée par rapport à la première desdites coques (11) et par rapport au crochet de verrouillage (29) à la fois autour d'un axe ou d'une charnière s'étendant parallèlement auxdits côtés (18, 19, 21, 22) des coques (11, 12).

4. Manchon de câble selon les revendications 1 à 3, **caractérisé en ce que** le crochet de verrouillage (29) du segment de verrouillage (28) de type genouillère respectif comprend une saillie (38) avec un trou traversant (39) pour recevoir un outil à effet de levier (40) tel qu'un tournevis pour verrouiller et/ou déverrouiller le segment de verrouillage (28) de type genouillère respectif.

5. Manchon de câble selon la revendication 4, **caractérisé en ce qu'**une force de verrouillage peut être appliquée par ledit outil à effet de levier (40) lorsque celui-ci est inséré dans ledit trou traversant (39) en poussant ou en tirant ledit outil à effet de levier dans une première direction, par exemple dans le sens des aiguilles d'une montre et **en ce qu'**une force de déverrouillage peut être appliquée par ledit outil à effet de levier (40) lorsque celui-ci est inséré dans ledit trou traversant (39) en poussant ou en tirant ledit outil à effet de levier dans une deuxième direction, par exemple dans le sens inverse des aiguilles d'une montre.

6. Manchon de câble selon les revendications 1 à 5, **caractérisé en ce que** la deuxième desdites coques (12) comprend des nervures (42) s'étendant perpendiculairement au deuxième côté de celle-ci au niveau des deux côtés du ou de chaque segment de verrouillage (28) de type genouillère.
